# EUROPÄISCHE PATENTSCHRIFT

(11) **EP 3 566 169 B1**
(45) Veröffentlichungstag und Bekanntmachung des Hinweises auf die Patenterteilung: **30.06.2021**
(21) Anmeldenummer: 17708683.2
(22) Anmeldetag: 04.01.2017
(51) Int. Cl.: G06F 21/71, H04L 29/06, H04L 12/24, G06F 11/36, G06F 15/76

(54) **ASYMMETRISCHE SYSTEM- UND NETZWERKARCHITEKTUR**
ASYMMETRICAL SYSTEM AND NETWORK ARCHITECTURE
ARCHITECTURE DE SYSTÈME ET DE RÉSEAU ASYMÉTRIQUE

(43) Veröffentlichungstag der Anmeldung: 13.11.2019
(73) Patentinhaber: SCHWARTZ, Gerhard, 60439 Frankfurt Hessen (DE)
(72) Erfinder: SCHWARTZ, Gerhard, 60439 Frankfurt Hessen (DE)
(74) Vertreter: Tergau & Walkenhorst Patentanwälte PartGmbB
(86) Internationale Anmeldenummer: PCT/EP2017/050130
(87) Internationale Veröffentlichungsnummer: WO 2018/127278

(56) Entgegenhaltungen:
- US-A1- 2016 366 134

## Beschreibung

### Stand der Technik

Heutige Netzwerke für IT-Kommunikation basieren in aller Regel auf der Vermittlung von Nachrichtenpaketen entsprechend dem TCP/IP - Standard und erfordern somit symmetrische Protokollstacks zwischen den beteiligten Systemen.

Dies führt zu einer funktionalen Symmetrie die meist in Software abgebildet wird, relativ hohe Komplexität mit sich bringt und viele Fehlermöglichkeiten und Schwachstellen in Bezug auf IT-Sicherheit gerade auch auf der Endgeräteseite zur Folge hat. Häufige Änderungen der eingesetzten Software erschweren die Gesamtsituation.

Die zahlreichen Endbenutzer sind oft nicht in der Lage, die Komplexität zu überblicken und angemessen auf auftretende Fehler zu reagieren - es entsteht hoher Bedarf an sachkundiger Unterstützung welche häufig nicht in ausreichendem Maß bereitgestellt werden kann, was wiederum die Nutzung der Anwendungen erheblich beeinträchtigt.

Noch schädlicher als zeitweise auftretende Ausfälle und daraus resultierende Kosten sind schwere IT-Sicherheitsvorfälle die zu sehr hohen Schadenssummen und erheblichem Reputationsverlust führen können. In manchen Fällen (z.B. Knowhow-Abfluss durch Industriespionage oder Sabotage von Produktionsprozessen) kann die Existenz des betreffenden Unternehmens bedroht sein, besonders gravierendere Auswirkungen sind bei kritischer Infrastruktur (z.B. für die Energieversorgung) zu befürchten.

Auch gut geschulte Endbenutzer können Sicherheitsbedrohungen nur bis zu einem gewissen Grad erkennen, gegen gezielte Angriffe z.B. durch versierte Cyberkriminelle oder Geheimdienstexperten sind sie häufig machtlos. Dies gilt besonders dann wenn die üblichen Warnungen vor dem Öffnen von angehängten Dokumenten oder dem Anklicken von Links nicht greifen, weil die vorgegebenen Arbeitsprozesse genau solche Aktionen erfordern.

Die Themen "Industrie 4.0" und "Internet der Dinge" führen zu weiteren Problemen in Bezug aufdie IT-Sicherheit, besonders durch die hohe Anzahl deranzubindenden "Dinge", deren aus Kostengründen meist sehr beschränkten internen Verarbeitungsmöglichkeiten welche der Implementierungstärkerer Sicherheitsvorkehrungen entgegenstehen und die weitgehend fehlende Kontrolle der Aktivitäten solcher "Dinge" durch Menschen.

Die mit der Entwicklung des Internet historisch gewachsenen Vorgangsweisenwaren auf die Kommunikation zwischen einer begrenzten Anzahl von gutwilligen, einander vertrauenden und miteinander kooperierenden Benutzergruppen ausgelegt. Es fehlen geeignete Verfahren, um auch in einer globalen, äußerst heterogenen und de facto nicht vertrauenswürdigen Umgebung die vielfältigen und sehr komplexen Vorgänge in der Netzwerkkommunikation zuverlässig zu regeln und sicher zu gestalten.

Zentrale IT-Infrastruktur (traditioneller Art oder auch Cloud-basierend) wird heute sehr häufig mit aus der Endgerätetechnik abgeleiteter Standardtechnologie realisiert die zwar zunächst nur relativ geringe Investitionen erfordert, jedoch vom Betrieb und besonders von der IT- Sicherheit her mit erheblichen Risiken behaftet und bei Betrachtung der Gesamtkosten sehr aufwändig ist.

US 2016/366134 A1 zeigt eine Asymmetrische System- und Netzwerkarchitektur mit manipulationssicheren Endgeräten.

### Offenlegung der Erfindung

Gegenstand der Offenlegung ist eine asymmetrische Architektur gemäß dem Anspruch 1 zum Aufbau und Betrieb von elektronischen Kommunikationsnetzwerken welche höhere Betriebssicherheit sowie einen besseren Schutz gegen Ausspähung und Manipulation bietet. Darüber hinaus wird durch den Einsatz dieser Architektur die Komplexität besonders im Endgerätebereich stark reduziert, somit sind dort auch höhere Zuverlässigkeit, höhere Benutzerakzeptanz und geringere Betriebskosten zu erwarten. Für die Endbenutzer entfällt weitestgehend die Verantwortung zum Schutz des Endgeräts vor Schadsoftware - das Anklicken von verseuchten Links oder Datenanhängen hat keine dauerhaften negativen Auswirkungen zur Folge. Vorteilhafte Weiterbildungen der Erfindung werden in den abhängigen Ansprüchen beansprucht.

Ein wesentliches Kennzeichen der System- und Netzwerkarchitektur ist die funktionale Asymmetrie durch die weitgehende Verlagerung der variablen Funktionalitäten innerhalb der Kommunikationsverbindungen an geschützte zentrale Knoten (,Hosts") die aus Gründen der Ausfallsicherheit repliziert werden können, gegebenenfalls auch mehrfach.

Die Endgeräte bzw. Endpunkte des Netzwerkes sind hingegen in dieser Architektur funktional eingeschränkt und enthalten nur so viel Funktionalität wie zu deren Betrieb als Browserterminal oder Konzentrator/Umsetzer im Zusammenwirken mit entsprechenden zentralen Anwendungen erforderlich ist. Hinzu kommen im Fall der personenbedienten Endgeräte einfache standardisierte lokale Anwendungsprogramme wie z.B. solche für Textverarbeitung, Tabellenkalkulation, Bildbearbeitung, Präsentationserstellung, Adress- und Telefonbuch, zentrale Paßwortverwaltung, eMail, Uhr und Kalender, Chat/ Social Networking, Notruffunktion, Audio/Video - Funktionen, Navigation (für mobile Geräte) und dergleichen.

Die Endpunkte des Netzwerkes dienen in der Regel zum Anschluß von Endgeräten, entweder für personenbediente Endgeräte entsprechend (32) ähnlich der heute üblichen Router für Paketvermittlung oder als Anschlussgeräte gemäß (46) für den unbedienten Betrieb von technischen Einrichtungen im "Internet der Dinge". Mischformen und Zusatzfunktionen sind dabei möglich, z.B. Kombinationsgeräte mit WLAN-Funktion, DECT-Telefonie und ZigBee-Schnittstelle für Geräte derHausautomatisierung.

Die Funktionen und Anwendungen der Endgeräte bzw. Endpunkte werden fest einprogrammiert und können nicht von entfernten Lokationen aus durch das Herunterladen von Software (z.B. Patches, Apps oder Plug-Ins) oder Firmware-Updates verändert werden. Durch diese Architektur sind die betreffenden Endgeräte bzw. Endpunkte somit auch vor Angriffen durch Schadsoftware geschützt. Dateninhalte können natürlich frei übertragen werden.

Sollen Änderungen oder funktionale Erweiterungen im Endgerätebereich vorgenommen werden, so erfordert dies das lokale Austauschen von Lesespeicherkomponenten.

Zum besseren Schutz vor Manipulationen sind angepasst an die jeweiligen Umstände entsprechende Maßnahmen möglich und vorgesehen, um einen unbefugten Austausch der Lesespeicherkomponenten zu verhindern bzw. eine gegebenenfalls erfolgte Manipulation offensichtlich zu machen (z.B. durch Versiegelung).

Darüber hinaus werden die durchgeführten Funktionsänderungen automatisch protokolliert und auch am Endgerät angezeigt.

Die Netzwerkarchitektur sieht optional auch den Einsatz mehrerer, ggf. auch unterschiedlicher Kommunikationspfade (drahtgebunden, drahtlos oder auch per Lichtwellenleiter) zwischen den Endpunkten einerseits und dem Netzwerk bzw. dem Host andererseits vor, um mittels der so erzielten Redundanz auch bei Ausfall eines Kommunikationspfades den störungsfreien Weiterbetrieb der Endpunkte bzw. Endgeräte zu ermöglichen, sowie ggf. unterschiedliche Betriebscharakteristiken zu unterstützen.

Darüber hinaus erlaubt die beschriebene Mehrfachauslegung auch eine leichte Migration beim Übergang auf neue Betriebsarten bzw. Protokolle sowie bei Bedarf auch die einfache Zurückschaltung in den vorherigen Zustand ("Fallback-Konzept").

Die Architektur sieht neben der marktbeherrschenden TCP/IP - Kommunikation optional oder auch alternativ eine Punkt-zu-Punkt oder Mehrpunktverbindung zwischen den Endgeräten und bestimmten Netzwerkelementen bzw. dem Host vor, beispielsweise um parallel zum Nutzdatenverkehr einen dedizierten Steuer- und Meldekanal einzurichten oder auch um damit besonders gesicherte Verbindungen zu bedienen.

Mittels spezieller Netzwerkelemente ist so auch eine Zuordnung von Übertragungskanälen innerhalb der verfügbaren Verbindungswege (Multiplexing) und das Schalten temporärer oder permanenter dedizierter Verbindungen möglich. Dies kann aus Sicht der Anwendung erhebliche Vorteile (z.B. kürzere Laufzeiten oder höhere Datensicherheit) gegenüber der beim TCP/IP -Protokoll genutzten Vermittlung von Datenpaketen ergeben. Dadurch kann auch die Problematik der "Distributed Denial of Service (DDoS)" - Attacken aufdas "Domain Name System (DNS)" umgangen werden.

Ebenso kann in den genannten Netzwerkelementen - sofern von der Konfiguration her vorgesehen - die Umschaltung einer Endgeräteverbindung auf einen anderen Host erfolgen.

Endgeräte können abhängig von ihrer Auslegung ggf. auch mehrere Hostverbindungen gleichzeitig nutzen und die Daten in unterschiedlichen Bereichen (z.B. Bildschirmfenstern) darstellen bzw. zwischen ihnen transferieren ("copy and paste").

Die Hostfunktion wird vorzugsweise auf einem eigenen Rechner in einer besonders gesicherten Umgebung realisiert, von dort erfolgt dann auch der Anschluss von übergeordneten IT-Systemen wie etwa ERP- oder zentralen Buchhaltungssystemen, Nachrichtenvermittlungs- oder Reservierungssystemen und dergleichen bzw. die Weiterleitung an Cloud-basierende Dienste.

Daneben ist an den Endgeräten bzw. Endpunkten optional auch der direkte Anschluss von lokalen Hosts vorgesehen, welche zusätzliche Funktionalität vor Ort ermöglichen ohne dass diese Rechner direkt an das Internet angeschlossen wären (Offline-Betrieb). Die zwischengeschalteten Endgeräte bzw. Endpunkte ermöglichen so einen sicheren Datenaustausch, isolieren jedoch vor direkten externen Zugriffen.

Die Endgeräte bzw. Endpunkte sind durch Einsatz geeigneter Mittel (z.B. Chipkarten) personalisierbar, hierdurch können beispielsweise Benutzerkennungen, Passwörter, system- und anwendungsbezogene Verschlüsselungsparameter, anwendungsbezogene funktionale Statusinformationen/Parameter und dergleichen sowie auch Anwenderdaten sicher gespeichert und im Bedarfsfall auch auf andere Endgeräte übertragen werden.

Verschlüsselungsverfahren (Ende-zu-Ende oder auch für bestimmte Teilstrecken) sind vorgesehen und werden durch die Architektur unterstützt.

Die Endgeräte bzw. Endpunkte werden durch fest eingebaute und applikationsspezifisch vorprogrammierte integrierte Schaltungen (ASIC's, für Application Specific Integrated Circuit) und die bereits beschriebenen lokal austauschbaren Lesespeicherkomponenten (ROM's, für Read Only Memory) gesteuert.

Die Endgeräte bzw. Endpunkte und auch die dort eingesetzten ROM's enthalten jeweils individuelle feste Kennungen um eine sichere Identifikation der eingesetzten Endgeräte bzw. Endpunkte und der aktuell eingesetzten Funktionalität zu ermöglichen.

Hinzu kommt die Personalisierung bzw. Authentisierung/Autorisierung per Chipkarte oder ähnliche Mittel oder über biometrische Verfahren, welche für bestimmte Anwendungen vorgeschrieben werden kann.

Für andere Anwendungen (etwa Nutzung von Suchmaschinen, reine Informationsdienste etc.) kann - sofern in der jeweiligen Konfiguration zugelassen - auch ein nicht personalisierter Betrieb unterstützt werden.

Die Endgeräte können mobilfunk- und multimediafähig sein, Messagingsysteme unterstützen und wie in (11) beschrieben fest programmierte lokale Anwenderfunktionen enthalten, welche ggf. auch im Online-Betrieb nutzbar sind.

Die physischen Formate der Endgeräte sind entsprechend dem jeweils angestrebten Nutzungsprofil variabel, neben traditionellen stationären Bildschirmgeräten sind weitere Formfaktoren wie etwa Laptops, Tablets und Handheld-Geräte ebenso wie am Körper getragene Geräte (z.B. "smart watches") realisierbar. Die eingesetzten Protokolle und Datenformate sind über die jeweiligen Formfaktoren hinweg kompatibel und werden durch das hostseitige Softwareportal unterstützt.

Die Endgeräte können ihrerseits mit Peripheriegeräten leitungsgebunden oder drahtlos verbunden werden, z.B. mit Druckern, Scannern, externen Datenspeichern oder Multimediageräten.

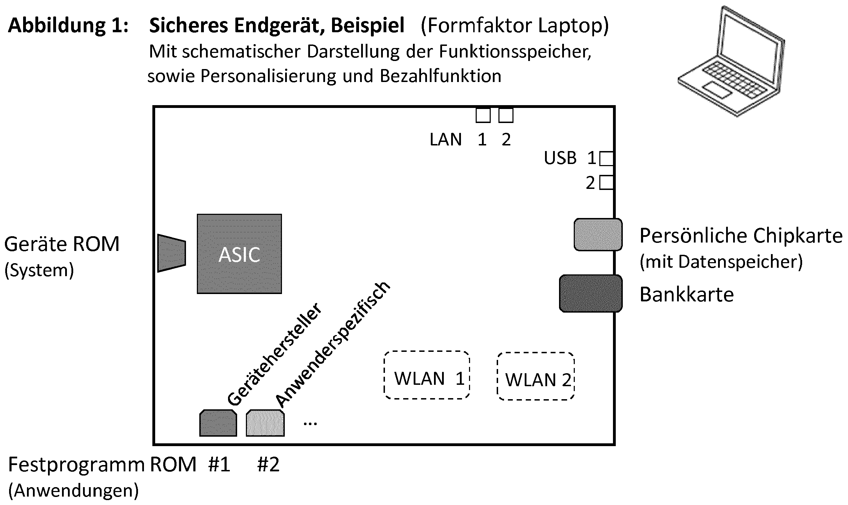

Die Abbildung 1 zeigt als typisches Beispiel eines manipulationssicheren Endgerätes gemäß Patentanspruch 1. ein typisches transportables Benutzerendgerät ("Laptop") welches keinen herkömmlichen Mikroprozessor und kein Betriebssystem wie etwa Windows oder Linux enthält. Die Funktionen solcher Geräte werden per Hardware durch applikationsspezifische Schaltkreise (ASIC's) und unveränderliche Festprogramme in Lesespeichern ("Read Only Memory", ROM's)gesteuert.

Eine Veränderung der Gerätefunktionen ("Update") ist nur durch lokalen Eingriff möglich und erfordert ggf. das Brechen eines Siegels. Der Einsatz eines neuen ROM kann mit einer Signaturprüfung verbunden sein, wird innerhalb des Geräts erkannt und angezeigt und kann ggf. an einen oder mehrere Hosts und/oder Netzwerkelemente signalisiert werden.

Typischerweise enthält ein sicheres Endgerät neben einem Geräte-ROM welcher u.a. auch die Kommunikation mit dem Hostportal und den Netzwerkelementen steuert noch weitere Festprogramme die vom Gerätehersteller, der Anwenderorganisation oder auch von hierfür lizensierten Drittanbietern bereitgestellt werden können.

Die Formfaktoren und technischen Schnittstellen der Geräte-ROM's und der Anwendungs-ROM's können unterschiedlich und auch abweichend von den heute gebräuchlichen Speicherkarten gestaltet sein, um Irrtümern bzw. lokalen Angriffen vorzubeugen.

Der Formfaktor des Tokens (hier am Beispiel einer persönlichen Chipkarte dargestellt) sollte ebenfalls unterschiedlich zum üblichen Bankkartenformat ausgestaltet sein. Hier könnte eventuell auch ein z.B. stift- oder schlüsselförmiges Token eingesetzt werden.

Das Token kann auch benutzereigene Daten speichern um z.B. eigene Daten und Dokumente auf unterschiedliche sichere Geräte übertragen und dort bearbeiten zu können ohne hierzu einen potentiell unsicheren Cloudservice nutzen zu müssen.

Darüber hinaus kann das Token ggf. auch Signaturen, Passwörter und sonstige Parameter für Authentisierung und Verschlüsselung der Daten enthalten.

Mittels des sicheren Endgerätes können ggf. auch Bezahlfunktionen durchgeführt werden. Die Abbildung zeigt hierzu beispielhaft einen Bankkarteneinschub in welchen Debit- oder Kreditkarten (typischerweise mit Chip) eingeführt werden können.

Die Kommunikation des sicheren Endgerätes erfolgt typischerweise über LAN oder WLAN, in Abb. 1 sind hierfür jeweils zwei Anschlüsse dargestellt die ggf. als redundante Verbindungen genutzt werden können, zum Anschluss von Peripheriegeräten sind zusätzlich zwei USB-Anschlüsse dargestellt. Dies stellt nur ein Beispiel dar, es können auch mehr und ggf. zusätzliche andersartige Anschlüsse (z.B. für Bluetooth) vorgesehen werden.

Die Nutzung eines Trusted Platform Module (TPM) innerhalb der sicheren Endgeräte wäre zwar möglich, bietet jedoch in diesem Umfeld kaum Mehrwert und wird teilweise kritisch gesehen. Ähnliches gilt für die Intel Active Management Technology, auch hier bestehen ernste Sicherheitsbedenken da diese über die integrierte Management Engine eine potentielle externe Angriffsmöglichkeit ("Backdoor") darstellt.

Die sicheren Endgeräte sind durch ihre Struktur und Funktionsweise weit weniger komplex als heutige PC's und funktionieren dadurch zuverlässiger, defekte oder abhanden gekommene Geräte können durch die Netzwerkelemente und Hosts leicht deaktiviert werden.

Das System management ist deutlich einfacher und überdies integraler Bestandteil des Protokolls zwischen dem Portal, den Netzknoten und den sicheren Endgeräten, eine separate Gerätemanagementfunktion wird nicht benötigt.

Personenbedienten Endgeräten funktional gleichgestellt sind innerhalb dieser Architektur die Anschlussgeräte für Maschinen, Sensoren und sonstige Geräte zur Kommunikation im industriellen Umfeld sowie im "Internet der Dinge" (Machine-to-Machine, M2M).

Diese Anschlussgeräte können entsprechend der jeweiligen Aufgabenstellung unterschiedlich ausgelegt sein, z.B. einfache Adapter etwa zum Anschluss einer meteorologischen Messstation oder größere Einheiten um innerhalb einer Maschine oder technischen Anlage eine hohe Anzahl von Sensoren, Steuerungen und Aktuatoren anzuschließen, sowie spezielle Auslegungen etwa für Zwecke der Hausautomatisierung oder auch für den mobilen Betrieb in Fahrzeugen.

Derartige Anschlussgeräte realisieren auch Zusatzfunktionen die häufig in den an sie angeschlossenen und oft recht einfachen Gerätschaften (z.B. Sensoren, Steuergeräte, Schalter, Leuchten etc.) nicht wirtschaftlich sinnvoll dargestellt werden können, etwa Protokollanpassungen oder Verschlüsselung und sonstige Sicherheitsfunktionen, und können ebenfalls durch Chipkarten oder ähnliche Mittel "personalisiert" bzw. konfiguriert werden.

Für die an diese Anschlussgeräte angeschlossenen "Dinge" entfällt damit die Notwendigkeit über ein eigenes Betriebssystem wie etwa Linux zu verfügen, über das normale Internetprotokoll TCP/IP zu kommunizieren und damit letztlich auch via Schadsoftware angreifbar zu sein.

Dies reduziert auch die Gefahr von Angriffen über "Botnets" (große Gruppen von per Schadsoftware gekaperten Geräten, die aus dem Internet der Dinge heraus Attacken gegen andere Netzwerkbenutzer durchführen).

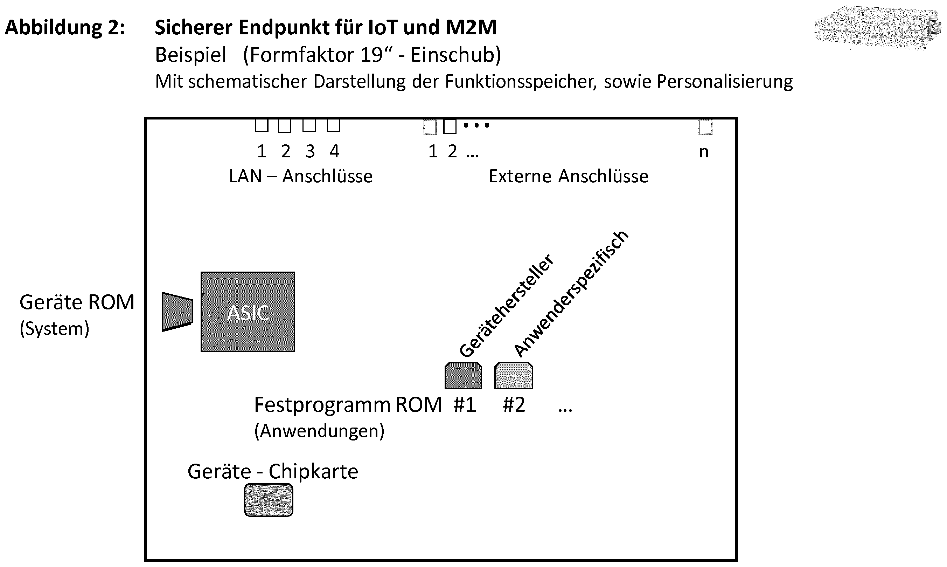

In Abbildung 2 ist als Beispiel für die Anwendungsbereiche loT und Industrie 4.0 ein sicherer Endpunkt für die Kommunikation Maschine-zu-Maschine (M2M) im industriellen Umfeld dargestellt.

Für kritische Anwendungen werden solche Endpunkte in der Regel redundant auszulegen sein, daher sind hier im kleinen Bild auch zwei 19" - Einschübe gezeigt. Das Protokollfür sichere Endgeräte und Endpunkte unterstützt redundante Konfigurationen und die automatische Umschaltung im Fehlerfall.

Die Komponenten für sichere Endpunkte sind weitgehend identisch mit jenen für sichere Endgeräte, sie werden jedoch teilweise etwas anders genutzt wodurch sich auch Unterschiede z.B. in der Programmierung der ROM's ergeben.

Für größere Aufgaben wie etwa die Steuerung einer Produktionszelle in einem Automobilwerk werden mehr und ggf. auch unterschiedliche externe Geräteanschlüsse benötigt werden, so etwa auch für verschiedene industrielle Feldbus-Systemewie Profibus oder Modbus. Derartige Funktionen können entweder in den sicheren Endpunkt integriert oder über vorgeschaltete Geräte der Automatisierungstechnik abgedeckt werden.

In Abbildung 2 sind vier LAN-Anschlüsse gezeigt, dies könnten beispielsweise zwei jeweils redundant ausgelegte Zugänge zum externen Netzwerk und zu einem davon getrennten firmeninternen Netzwerk sein.

Am firmeninternen Netzwerk kann auch ein Host angeschlossen sein der jedoch vom externen Netzwerk her nicht erreicht werden kann. Die Kommunikation jenes lokalen Offline-Hosts mit anderen Hosts oder sicheren Endgeräten/Endpunkten im externen Netzwerk würde dann über eine vom Host gesteuerte Kopplungsfunktion innerhalb des sicheren Endpunkts erfolgen, bei welcher sich dieser Endpunkt gegenüber den anderen beteiligten Systemkomponenten jeweils als sicheres Endgerät darstellt und den Datenaustausch unterstützt.

In der Abbildung sind keine WLAN-Anschlüsse dargestellt da diese für einen 19" - Einschub innerhalb eines metallischen Geräteschranks wenig praktikabel wären, entsprechende Verbindungen würden zweckmäßigerweise über externe WLAN-Geräte realisiert.

Ebenso ist keine Bankkarte dargestellt, da etwaige Bezahlfunktionen in diesem Umfeld meist in anderer Form realisiert werden dürften.

Die Steuerung des sicheren Endpunktes erfolgt über einen oder mehrere ASIC's und in ROM fest eingespeicherte Programme.

Der in der Abbildung 2 gezeigte ASIC ist funktional vergleichbar mit jenem in Abbildung 1 gezeigten Bauteil, die Funktionen zur Bildschirm- und Tastatursteuerung können fürdie Ansteuerung eines externen Konsolgeräts genutzt werden welches über ein hier nicht dargestelltes redundantes Konsolbus-Paar je nach Bedarf auf unterschiedliche sichere Endpunkte innerhalb eines Geräteschranks aufgeschaltet werden kann.

Die Einrichtung der verschiedenen Parameter und Codes des sicheren Endpunktes erfolgt ebenso sie bei den sicheren Endgeräten über ein Token wie etwa die hier dargestellte Geräte-Chipkarte oder ähnliches.

Neben den bereist beschriebenen Endgeräten bzw. Endpunkten auf der Peripherieseite und den mit ihnen kommunizierenden Hosts umfasst die Architektur auch verschiedene Netzwerkelemente (Netzknoten), zum Teil mit wesentlichen Steuerungsfunktionen.

Dies sind zum einen die bekannten Routerfunktionen zurAbwicklung des standardmäßigen paketorientierten TCP/IP - Verkehrs, zum anderen die Steuerung von speziellen Verbindungselementen, Multiplexem oder ähnliches um temporäre oder permanente Kommunikationskanäle (drahtgebunden/drahtlos/Lichtwellenleiter) zu schalten.

Diese Funktionen können auch kombiniert in einem Netzknoten realisiert werden (Nutzung von Multiprotocol Label Switching, MPLS).

Dadurch wird es auch möglich dedizierte Verbindungen zu erstellen die besonderen Kriterien wie etwa hohe Abhörsicherheit oder bestimmten Laufzeitanforderungen genügen. Diese dedizierten Verbindungen sind entweder permanent festgelegt oder werden in der Regel aus dem Netzwerk heraus aufgebaut, nachdem sich die Endgeräte über einen Hilfskanal identifiziert und den Verbindungswunsch angemeldet haben.

Hosts und Netzwerkelemente innerhalb der beschriebenen asymmetrischen Netzwerkarchitekturkönnen durch entsprechende Vorkehrungen gegen externe Angriffe geschütztwerden, z.B. durch Einsatz eines Betriebssystems welches durch sehr robuste Verwaltung des Hauptspeichers die Überschreibung anderer Bereiche ("Buffer Overflow Attacks") verhindert.

Weitere IT-Sicherheit ergibt sich im Bereich der Hosts und Netzwerkelemente durch den Einsatz von sicherer Halbleitertechnologie welche nicht über in das Design integrierte Fernzugriffsmöglichkeiten (sogenannte "Backdoors") zugänglich ist.

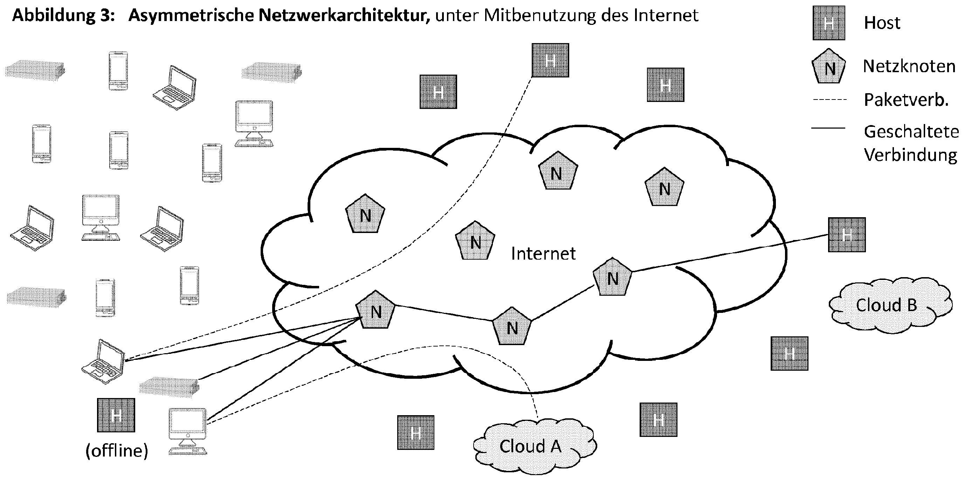

In Abbildung 3 ist beispielhaft eine Implementierung einer asymmetrischen Netzwerkarchitektur dargestellt, wobei auch auf die Koexistenz mit herkömmlicher Internettechnologie eingegangen wird. Hosts und Netzknoten im Sinne dieser Architektur können sowohl mittels üblicher Paketvermittlung als auch über geschaltete Verbindungen oder Kanäle untereinander und mit sicheren Endgeräten und Endpunkten kommunizieren, hierbei kann MPLS ("Multiprotocol label switching") eingesetztwerden.

Als Anwendungsbeispiel ist eine Benutzergruppe mit sicheren Endgeräten im Desktop- und Laptop-Format sowie einem sicheren Endpunkt für M2M - Kommunikation dargestellt.

Diese Geräte nutzen eine geschaltete Verbindung zum nächsten Netzknoten, der wiederum über weitere Netzknoten und geschaltete Verbindungen mit einem entfernten Host verbunden ist. Ein weiterer lokaler Host ist mit dem sicheren Endpunkt verbunden, jedoch aus dem Netz nicht sichtbar ("offline"). Dabei ist vom Host gesteuerter Datenverkehr mit entfernten Gegenstellen per Kopplungsfunktion im sicheren Endpunkt möglich.

Zusätzlich können die sicheren Endgeräte über herkömmliche Paketvermittlung mit weiteren Partnern kommunizieren, z.B. Dienste von anderen Hosts oder Cloud-basierende Angebote nutzen.

Das abgebildete Beispiel könnte eine Produktionsstätte darstellen, welche einen lokalen Host zur Produktionssteuerung einsetzt und mit einem weiteren Host in der Konzernzentrale in Verbindung steht. Der lokale Host ist aus dem Netz nicht sichtbar ("offline"). Allfällige Fernwartungszugänge erfolgen nach Möglichkeit ebenfalls über den vorgelagerten sicheren Endpunkt und geschaltete Verbindungen.

Zur Sicherstellung der Verfügbarkeit sind Redundanzen auf Host-, Netzwerk- und Geräteebene möglich und werden durch die Protokolle der Netzwerkarchitektur unterstützt, diese sind zwecks Vereinfachung in dieser Darstellung nichtenthalten.

Diesicheren Endgeräte und Endpunkte unterstützen sowohl die neue Netzwerkarchitektur als auch herkömmliche Paketvermittlung im Internet und ermöglichen so eine "weiche" Migration.

Eine wichtige Voraussetzung zum Betrieb der sicheren Endgeräte und Endpunkte ist der Einsatz einer entsprechend ausgelegten Portalsoftware im Host, welche zusammen mit der hardwarebasierenden Steuerung der Endgeräte und Endpunkte deren Funktionalität sicherste!lt.

### Literaturhinweise

Nachfolgend eine kleine exemplarische Auswahl von Themenbeiträgen zur IT-Sicherheit in heutigen Netzwerken:
http://www.bmwi.de/BMWi/Redaktion/PDF/Publikationen/Studien/it-sicherheitsmarktin-deutschland
http://www.computerwoche.de/a/wirkungslose-it-sicherheits-massnahmen.3229874
http://thehackernews.com/2013/11/Linux-ELF-malware-php-cgi-vulnerabili y.html
http://www.linux-magazine.com/Online/News/New-Worm-Attacks-Linux-Devices
http://thehackernews.com/2016/03/internet-of-thing-malware.html
http://www.eweek.com/security/stealthy-apache-exploit-redirects-victims-to-blackhole-malware
https://www.virusbulletin.com/virusbulletin/2014/07/mayhem-hidden-threat-nix-web-servers
https://www.akamai.com/de/de/about/news/press/2015-press/xor-ddos-botnet-attacking-linux-machines.isp
http.//www.spiegel.de/international/world/regin-malware-unmasked-as-nsa-tool-after-spiegel-publishes-source-code-a-1015255.html
https://www.neowin.net/news/mamba-ransomware-encrypts-your-hard-drive-manipulates-the-boot-process
https://www.technologyreview.com/s/534516/holding-data-hostage-the-perfect-internet-crime/
https://en.wikipedia.org/wiki/Denial-of-service attack
https://www.us-cert.gov/ncas/tips/ST04-015
http://ieeexplore.ieee.org/document/6158635/?arnumber=6158635
https://www.heise.de/newsticker/meldung/31C3-Warnung-vor-Secure-Boot-und-Trusted-Computing-2507013.html
https://www.oeffentliche-it.de/trendsonar
http://thehackernews.com/2013/11/Linux-ELF-malware-php-cgi-vulnerability.html
http://www.linux-magazine.com/Online/News/New-Worm-Attacks-Linux-Devices
http://thehackernews.com/2016/03/internet-of-thing-malware.html
http://www.eweek.com/security/stealthy-apache-exploit-redirects-victims-to-blackhole-malware
https://www.virusbulletin.com/virusbulletin/2014/07/mayhem-hidden-threat-nix-web-servers
https://www.akamai.com/de/de/about/news/press/2015-press/xor-ddos-botnet-attacking-linux-machines.isp

## Patentansprüche

1. Asymmetrische System- und Netzwerkarchitektur mit manipulationssicheren Endgeräten die keinen herkömmlichen Mikroprozessor enthalten, sondern durch fest eingebaute und applikationsspezifische Schaltungen und durch unveränderliche Festprogramme in Lesespeichern gesteuert werden. Die sicheren Endgeräte bieten einen fest einprogrammierten Funktionsumfang, der nicht von entfernten Lokationen durch das Herunterladen von Software oder Firmware-Updates verändert werden kann. Die Funktionen dieser sicheren Endgeräte werden ausschließlich per Hardware mit Hilfe von dedizierten Halbleiterelementen, z.B. ASIC'S, Application-Specific Integrated Circuits, und zugehöriger Firmware realisiert; diese Firmware zur Gerätesteuerung sowie die auf den Endgeräten einsetzbaren festen Programme sind in Lesespeichermodulen enthalten, deren Inhalt nicht verändert werden kann. Änderungen oder Erweiterungen der Gerätefunktionen oder Anwendungsprogramme erfordern den physischen Austausch der Lesespeicher, dies wird automatisch registriert und am Gerät mit Warnhinweis angezeigt. Die Code- und Dateninhalte sind innerhalb der Geräte strikt getrennt, ein externer Download von auf den sicheren Endgeräten ausführbaren Funktionen oder Programmen ist nicht möglich.

2. Die Asymmetrische System- und Netzwerkarchitektur, ASNA, gemäß Anspruch 1 enthält als Gegenstück zu den sicheren Endgeräten zentralseitig eine entsprechende Portalsoftware, im Folgenden "Portal" genannt, die auf einem Host läuft und für den Betrieb dieser hardwaregesteuerten Endgeräte ausgelegt ist. In Kombination ersetzen die sicheren Endgeräte und die Portalsoftware die Funktion herkömmlicher Browser, und stellen die Schnittstelle zu den in den sicheren Endgeräten verfügbaren festen Programmen dar. Die Portalsoftware stellt die Verbindung zu zentralen Anwendungen, z.B. ERP- und CRM-Systeme, Buchungs- und Reservierungssysteme, Zahlungsverkehrssysteme, Nachrichtenvermittlung etc., her und bietet geeignete Programmschnittstellen, API's, die es Softwareherstellern ermöglicht deren Produkte zur Nutzung über sichere Endgeräte verfügbar zu machen. Das Portal ermöglicht auch eine ggf. erforderliche Umsetzung von Seiteninhalten, um die Nutzung bestehender Websites über sichere Endgeräte zu ermöglichen. Darüber hinaus unterstützt das Portal mit seinem einheitlichen Protokoll auch den Betrieb sicherer Endpunkte für Industrie 4.0 und das "Internet der Dinge".

3. Kennzeichnend für die sicheren Endgeräte der Asymmetrischen System- und Netzwerkarchitektur gemäß Anspruch 1 sind eine fest eingebaute unveränderliche Gerätekennung, zusätzlich Lizenznummer- und Versionskennung der jeweils eingesetzten Firmware und festen Programme für die ggf. auch mehrere Speicherkarteneinschübe vorhanden sein können, sowie eine sichere Kennzeichnung des jeweils aktuellen Nutzers über ein Token wie z.B. eine Chipkarte oder einen elektronischen Stift. Dieses Token identifiziert den Benutzer, wird darüber hinaus zur Verschlüsselung des Datenverkehrs herangezogen, typischerweise end-to-end encryption, ggf. Nutzung von VPN- Funktionen, und kann zur Personalisierung des Geräte- und Anwendungsverhaltens verwendet werden. Darüber hinaus kann dieses Token auch durch den Benutzer frei verwendbare Datenbereiche beinhalten, z.B. um auf einfache Weise eigene Dokumente zwischen verschiedenen sicheren Endgeräten transferieren zu können. Sofern es entsprechend konfiguriert ist kann ein sicheres Endgerät auch ohne Token und somit anonym benutzt werden, z.B. für das Abfragen von allgemein zugänglichen Seiteninhalten. Transaktionen erfordern im Regelfall die Identifizierung des Benutzers per Token, Bezahlvorgänge erfordern darüber hinaus die Nutzung einer entsprechenden Komponente, z.B. Bankkarte mit Chip oder Magnetstreifen, für die ein entsprechender Einschub vorgesehen ist. Bei mobilen sicheren Geräten kann auch eine drahtlose Kommunikation, z.B. NFC, für Bezahlvorgänge genutzt werden.

4. Kennzeichnend für die sicheren Endgeräte der Asymmetrischen System- und Netzwerkarchitektur gemäß Anspruch 1 sind die mögliche gleichzeitige Bedienung mehrerer Kommunikationsströme zu unterschiedlichen Hosts, beispielsweise um unterschiedliche Anwendungen in separaten Bildschirmfenstern anzuzeigen und Dateninhalte zwischen diesen lokal transferieren zu können. Ein wichtiges Merkmal für die Asymmetrische System- und Netzwerkarchitektur ist jedoch, dass im Gegensatz zur herkömmlichen Architektur die Anzahl der nutzbaren Kanäle und die Art der nutzbaren Anwendungen und Funktionen durch entsprechende Personalisierung leicht, zuverlässig und sehr granular festgelegt werden kann. Die Rollen und Rechte der Endbenutzer sind in einem Unternehmensumfeld durch die zentrale Personalisierung der Token genau festgelegt, im hostseitigen Portal kann durch geeignete Maßnahmen wie z.B. Whitelisting die bestimmungsgemäße Nutzung der Endgeräte leicht sichergestellt werden. Für private Endbenutzer - deren Portal in der Regel bei einem öffentlichen Kommunikationsanbieter liegt - bieten sich dem Anbieter zahlreiche Optionen zur Darstellung unterschiedlicher Leistungs- und Tarifmodelle, die durch Einsatz der personalisierten Token auch an anderen sicheren Endgeräten nutzbar sind. So könnte ein privater Nutzungsplan beispielsweise vorsehen, dass der Endbenutzer nur eine geschaltete Verbindung zum Portal seines Anbieters hat und von diesem im Bedarfsfall direkt an eines einer klar definierte Untermenge von Portalen weitergeschaltet wird, etwa an das entsprechende Portal seiner Bank, wodurch höchstmögliche Sicherheit gegen Ausspähung und Manipulation erreicht wird.

5. Kennzeichnend für die sicheren Endgeräte und die sicheren Endpunkte der Asymmetrischen System- und Netzwerkarchitektur gemäß Anspruch 1 ist auch, dass diese trotz fest vorgegebenem Funktionsumfang und ohne traditionelles Betriebssystem in der Lage sind über hardwareresidente Funktionen verschiedene Peripheriegeräte wie etwa Drucker, Scanner, externe Datenspeicher, Audio/Video-Geräte, Geräte zur Hausautomatisierung und dergleichen über standardisierte leitungsgebundene Schnittstellen wie z.B. USB oder drahtlose Schnittstellen wie z.B. Bluetooth zu bedienen.

6. Kennzeichnend für die Asymmetrische System- und Netzwerkarchitektur gemäß Anspruch 1 ist, dass sowohl die sicheren Endgeräte als auch sichere Endpunkte für Industrie 4.0 und das "Internet der Dinge" zum Anschluss der meist unbedienter Gerätschaften, Signalgeber und dergleichen mit den gleichen Protokollen aus einem hostseitigen Portal, wie in Anspruch 2 beschrieben, bedient werden. Die genannten Endgeräte und Endpunkte werden in gleicher Weise "personalisiert", sie nutzen jeweils die unveränderliche Gerätekennung, zusätzlich Lizenznummer- und Versionskennung der jeweils eingesetzten Firmware und festen Programme, sowie eine sichere Kennzeichnung des jeweils aktuellen Nutzung über ein physisches Token wie z.B. eine Chipkarte oder einen elektronischen Stift, und nutzen gleichartige Verschlüsselungsverfahren mit jeweils unterschiedlichen Schlüsseln. Sichere Endpunkte können auch Gateway- und Konzentratorfunktionen übernehmen, z.B. für die Anbindung von Geräten oder Systemen die aus dem Netz nicht direkt ansprechbar sein sollen, zum Anschluss vieler Sensoren oder Steuerelemente an einen Endpunkt, oder auch zur Bedienung mehrerer oder vieler sicherer Endgeräte über eine geringere Anzahl gemeinsamer Kommunikationsanschlüsse. Zum Anschluss an sichere Endpunkte können auch bereits bestehende Schnittstellen, z.B. Industriebussysteme, genutzt werden. Zur Erhöhung der Betriebssicherheit können ggf. Redundanzverfahren eingesetzt werden, z.B. durch Nutzung einer alternativen Verbindung zum Netzwerk, wobei auch hier für sichere Endgeräte und Endpunkte die gleichen Methoden genutzt werden können.

7. Kennzeichnend für die Asymmetrische System- und Netzwerkarchitektur gemäß Anspruch 1 in der Betriebsart Leitungs-oder Kanalvermittlung ist, dass die temporäre oder permanente Schaltung von Verbindungen zentral vom Netzwerk oder einem Portal wie in Anspruch 2 beschrieben unter Mitwirkung der hierfür relevanten Netzwerkelemente gesteuert wird. Optional ist auch der Einsatz von Abrufverfahren möglich, hierdurch kann eine Flusskontrolle erfolgen, um eine Überlastung des Netzwerkes bzw. des Hosts zu verhindern. Durch die dedizierte Schaltung von Verbindungen erhöht sich deren Qualität, z.B. schnelle und stabile Laufzeiten, erhöhte Sicherheit gegenüber missbräuchlicher Ausspähung oder Umleitung, sogenannte "man-in-the-middle" -Attacken.

8. Kennzeichnend für die Asymmetrische System- und Netzwerkarchitektur gemäß Anspruch 1 ist die Auslegung für Hybridbetrieb, etwa im internationalen Bereich zur lokalen Bedienung von Teilnehmern im traditionellen Paketvermittlungsbetrieb, mit Weiterleitung des Datenverkehrs via Leitungs- oder Kanalvermittlung in Länder mit strengeren Datenschutzbestimmungen, und für Interoperabilität mit öffentlichen und privaten Cloudsystemen mit Hilfe entsprechender Netzwerkelemente.

9. Kennzeichnend für die Hosts innerhalb der Asymmetrischen System- und Netzwerkarchitektur gemäß Anspruch 1 in Verbindung mit Anspruch 2 sind die im hostseitigen Portal wahrgenommen Steuerungsfunktionen für die sicheren Endgeräte im Verbund mit deren hardwarebasierenden Gerätefunktionen, wobei neben dem reinen Browserbetrieb zur Nutzung von Websites auch die lokal vorhandenen festen Programme, z.B. zur Anzeige und Bearbeitung von Dokumenten, und hostseitig gehaltene Zusatzprogramme, funktional äquivalent zu sogenannten "Apps" welche auf sicheren Endgeräten nicht eingesetzt werden können, unterstützt werden. Darüber hinaus stellt das Portal die Verbindung zu nachgelagerten zentralen bzw. Cloud-basierenden Anwendungen her und unterstützt Sicherheitsfunktionen wie Authentisierung des sicheren Endgerätes und des jeweiligen Benutzers sowie die Verschlüsselung des Datenverkehrs oder auch einzelner Dateninhalte, sowie im Verbund mit dem Netzwerk entsprechende Routing- und Umschaltfunktionen welche beispielsweise durch Ausfälle oder Überlastung erforderlich werden.

## Claims

1. Asymmetric system and network architecture with tamper-proof terminals that do not contain a conventional microprocessor but instead are controlled by permanently installed application-specific circuits and by invariant programs in read-only memories. The secure terminals offer a fixed programmed functional scope that cannot be changed from remote locations by downloading software or firmware updates. The functions of these secure terminals are implemented exclusively by hardware with the aid of dedicated semiconductor elements, e.g. ASIC's, Application-Specific Integrated Circuits, and associated firmware; this firmware for device control as well as the fixed programs that can be used on the terminals are contained in read-only memory modules, the contents of which cannot be changed. Changes or extensions to the device functions or application programs require physical replacement of the read-only memory, which is automatically registered and displayed on the device with a warning message. The code and data contents are strictly separated within the devices, and no external download of functions or programs that can be executed on the secure devices is possible.

2. The asymmetric system and network architecture, ASNA, according to Claim 1 comprises a corresponding portal software, hereafter designed as "portal", on the central side, which runs on a host and is designed for operating these hardware-controlled terminals as a counterpart to the secure terminals. In combination, the secure terminals and the portal software replace the function of conventional browsers and represent the interface to the fixed programs available in the secure terminals. The portal software creates the connection to central applications such as ERP and CRM systems, booking and reservation systems, payment transaction systems, message routing, etc., and provides suitable program interfaces or APIs that enable software producers to make their products available for use via secure terminals. The portal also enables, if applicable, the conversion of page contents, in order to enable the use of existing websites via secure terminals. The portal with its uniform protocol also supports the operation of secure endpoints for industry 4.0 and the "Internet of Things".

3. The secure terminals of the asymmetric system and network architecture according to Claim 1 are **characterized by** a permanently installed, fixed device ID, in addition to license number and version ID of the respective firmware used and fixed programs, for which, if applicable, a plurality of memory card slots may also be present, as well as a secure identification of the current user via a token such as a chip card or an electronic pen. This token identifies the user and is also used to encrypt the data traffic, typically by end-to-end encryption, possibly using VPN functions, and can be used to personalize the device behaviour and application behaviour. In addition, this token can also contain data areas that are freely accessible to a user, for example, in order to be able to easily transfer their own documents between different secure terminals. If configured appropriately, a secure terminal can also be used without a token and thus anonymously, e.g. for querying publicly accessible page contents. Transactions usually require the identification of the user by token, payment transactions additionally require the use of a corresponding component, e.g. bank card with chip or magnetic strip, for which a corresponding slot is provided. For mobile secure devices, wireless communication, e.g. NFC, can also be used for payment transactions.

4. The secure terminals of the asymmetric system and network architecture according to Claim 1 are **characterized by** the possibility of simultaneous operation of a plurality of communication streams to different hosts, for example, in order to display different applications in separate display windows and to be able to transfer data content locally between them. However, an important feature of the asymmetric system and network architecture is that, unlike the traditional architecture, the number of usable channels and the type of usable applications and functions can be specified easily, reliably and in a highly granular way by appropriate personalization. The roles and rights of the end users are precisely defined in a company environment by the central personalization of the tokens; in the host-side portal, appropriate measures such as whitelisting can be used to easily ensure the intended use of the end devices. For private end users - whose portal is usually located on a public communication provider - numerous options are available to the provider for displaying different service and tariff models, which can also be used on other secure terminals by using the personalized tokens. For example, a private usage plan could provide that the end user has only one switched connection to the portal of their provider and, as required, is directly connected from this to one of a clearly defined subset of portals, for example to the corresponding portal of the user's bank, thereby achieving the highest possible security against eavesdropping and manipulation.

5. The secure terminals and the secure endpoints of the asymmetric system and network architecture according to Claim 1 are also **characterized in that**, despite the fixed functional scope and without a traditional operating system, these devices are able to operate various peripheral devices such as printers, scanners, external data storage, audio/video devices, devices for home automation and the like using hardware-resident functions over standardized wired interfaces such as USB, or wireless interfaces such as Bluetooth.

6. The asymmetric system and network architecture according to Claim 1 is **characterized in that** for connecting the mostly unattended devices, signalling devices and the like, both the secure terminals and secure end points for industry 4.0 and the "Internet of Things" are operated with the same protocols from a host-side portal, as described in Claim 2. The said terminals and end points are "personalized" in the same way, they each use the fixed device ID, in addition to license number and version ID of the respective firmware and fixed programs used, as well as a secure identification of the respective current usage via a physical token such as a chip card or an electronic pen, and use similar encryption methods, each with different keys. Secure end points can also perform gateway and concentrator functions, e.g. for connecting devices or systems that are not designed to be directly addressed from the network, for connecting many sensors or controls to one end point, or else for operating a plurality or many secure terminals via a small number of shared communication connections. Existing interfaces, e.g. industrial bus systems, can also be used to connect to secure end points. Redundancy methods may be used to increase operational security, e.g. by using an alternative connection to the network, wherein the same methods can also be used here for secure terminals and end points.

7. The asymmetric system and network architecture according to Claim 1 is **characterized in that** in the line- or channel-switching operating mode the temporary or permanent switching of connections is controlled centrally by the network or by a portal as described in Claim 2 with the involvement of the relevant network elements. Optionally, the use of retrieval methods is also possible, which can be used to provide flow control in order to prevent overloading of the network or the host. The dedicated switching of connections increases their quality, e.g. fast and stable runtimes, increased security against abusive eavesdropping or diversion, so-called "man-in-the-middle" attacks.

8. The asymmetric system and network architecture according to Claim 1 is **characterized by** being designed for hybrid operation, for example in the international domain for the local operation of subscribers in traditional packet switching operation, with the forwarding of data traffic via line- or channel-switching to countries with stricter data protection regulations, and for interoperability with public and private cloud systems using appropriate network elements.

9. The hosts within the asymmetric system and network architecture according to Claim 1 in conjunction with Claim 2 are **characterized by** control functions implemented in the host-side portal for the secure end devices in combination with their hardware-based device functions, wherein in addition to the pure browser operation for using websites the locally present fixed programs, for example, for displaying and editing documents, and additional host-side programs, functionally equivalent to so-called "apps" which cannot be used on secure terminals, are also supported. In addition, the portal establishes the connection to downstream central or cloud-based applications and supports security functions such as authentication of the secure terminal and the respective user, as well as encryption of the data traffic or of individual data contents and, in conjunction with the network, corresponding routing and switching functions, which are required due to failures or overloads, for example.

## Revendications

1. Architecture de système et de réseau asymétrique avec des terminaux protégés contre les manipulations ne comprenant pas de microprocesseur classique, mais commandés par des circuits intégrés de manière fixe et spécifiques à l'application et par des programmes fixes inaltérables dans des mémoires de lecture. Les terminaux protégés offrent un périmètre fonctionnel programmé de manière fixe ne pouvant pas être modifié à partir d'emplacements distants par téléchargement d'un logiciel ou de mises à jour de micrologiciel. Les fonctionnalités de ces terminaux protégés sont exclusivement réalisées par matériel à l'aide d'éléments semi-conducteurs dédiés, par exemple des ASIC, Application-Specific Integrated Circuits, et des micrologiciels associés ; ces micrologiciels pour la commande d'appareil ainsi que les programmes fixes utilisables sur les terminaux se trouvent dans des modules de mémoire de lecture dont le contenu ne peut pas être modifié. Des modifications ou évolutions des fonctionnalités d'appareil ou de programmes applicatifs nécessitent le remplacement physique des mémoires de lecture, cela est automatiquement enregistré et affiché en tant qu'alerte au niveau de l'appareil. Les contenus de code et de données sont strictement séparés à l'intérieur des appareils, un téléchargement externe de fonctionnalités ou programmes exécutables par les terminaux protégés n'est pas possible.

2. Architecture de système et de réseau asymétrique, ASNA, selon la revendication 1, comprenant, en tant que contrepartie aux terminaux protégés, du côté central, un logiciel de portail correspondant dénommé « portail » dans ce qui suit, lequel tourne sur un hôte et est conçu pour le fonctionnement de ces terminaux commandés par matériel. En combinaison, les terminaux protégés et le logiciel de portail remplacent la fonction des navigateurs classiques, et constituent l'interface avec les programmes fixes disponibles dans les terminaux protégés. Le logiciel de portail établit la connexion avec des applications centrales, par exemple des systèmes ERP et CRM, des systèmes de retenue et de réservation, des systèmes de transactions de paiement, de transmission de messages, etc., et fournit des interfaces de programme adéquates, API, lesquelles permettent à des éditeurs de logiciels de rendre leurs produits disponibles pour l'utilisation via des terminaux protégés. Le portail permet également une mise en œuvre nécessaire le cas échéant de contenus de pages, pour permettre l'utilisation de sites web existants via des terminaux protégés. Le portail supporte par ailleurs, avec son protocole uniforme, l'exploitation de points terminaux protégés pour l'industrie 4.0 et « l'internet des objets ».

3. Terminaux protégés de l'architecture de système et de réseau asymétrique selon la revendication 1, **caractérisés par** un identifiant d'appareil inaltérable intégré de manière fixe, en plus d'un identifiant de numéro de licence et de version du micrologiciel respectivement utilisé et des programmes fixes pour lesquels il peut également y avoir, le cas échéant, plusieurs emplacements d'insertion pour cartes mémoires, ainsi que par un identifiant protégé de l'utilisateur respectivement actuel via un jeton, tel par exemple une carte à puce ou un stylo électronique. Ce jeton identifie l'utilisateur, est en outre pris en compte pour le cryptage du trafic de données, typiquement un cryptage end-to-end, l'utilisation le cas échéant de fonctions VPN, et peut être utilisé pour la personnalisation du comportement applicatif et de l'appareil. Ce jeton peut par ailleurs également comprendre des zones de données librement utilisables par l'utilisateur, par exemple pour pouvoir transférer de manière simple des documents propres entre différents terminaux protégés. Dans la mesure où il est configuré de manière correspondante, un terminal protégé peut également être utilisé sans jeton, et donc anonymement, par exemple pour l'interrogation de contenus de pages généralement accessibles. Les transactions nécessitent en règle générale l'identification de l'utilisateur par jeton, les processus de paiement exigent en plus l'utilisation d'un élément correspondant, par exemple une carte bancaire avec puce ou piste magnétique, pour laquelle un emplacement d'insertion correspondant est prévu. En cas d'appareils protégés mobiles, il est également possible de faire appel à une communication sans fil, par exemple NFC, pour des processus de paiement.

4. Terminaux protégés de l'architecture de système et de réseau asymétrique selon la revendication 1, **caractérisés par** la possibilité d'exploitation simultanée de plusieurs flux de communication vers différents hôtes, par exemple pour afficher différentes applications dans des fenêtres d'écran d'affichage séparées et pour pouvoir transférer localement des contenus de données entre ceux-ci. Une caractéristique importante de l'architecture de système et de réseau asymétrique réside cependant en ce que, contrairement à l'architecture classique, les nombre de canaux utilisables et le type des applications et fonctionnalités utilisables peuvent être définis facilement, de manière fiable et très granulaire grâce à une personnalisation correspondante. Dans un environnement d'entreprise, les rôles et droits des utilisateurs finaux sont définis avec exactitude par la personnalisation centrale des jetons, au niveau du portail côté hôte, grâce à des mesures adéquates telles par exemple le whitelisting, l'utilisation conforme des terminaux est facile à garantir. Pour des utilisateurs finaux privés - dont le portail se situe en règle générale chez un prestataire de services de communication public - de nombreuses options s'offrent au prestataire pour la présentation de différents modèles de prestations et tarifs également utilisables sur d'autres terminaux protégés grâce à l'utilisation des jetons personnalisés. Un plan d'utilisation privé pourrait donc par exemple prévoir que l'utilisateur final dispose seulement d'une connexion commutée au portail de son prestataire et qu'en cas de besoin, celui-ci le fait directement avancer vers un sous-ensemble clairement défini de portails, tels le portail correspondant de sa banque, moyennant quoi on obtient une protection la plus élevée possible contre l'espionnage et la manipulation.

5. Terminaux protégés et points terminaux protégés de l'architecture de système et de réseau asymétrique selon la revendication 1, **caractérisés en outre en ce que**, malgré le périmètre fonctionnel défini de manière fixe et sans système d'exploitation traditionnel, ils sont en mesure, via des fonctionnalités résidant sur le matériel, d'exploiter divers périphériques tels par exemple des imprimantes, scanners, mémoires de données externes, appareils audio/vidéo, appareils de domotique et similaires, via des interfaces standardisées filaires, par exemple USB, ou des interfaces sans fil telles par exemple Bluetooth.

6. Architecture de système et de réseau asymétrique selon la revendication 1, **caractérisée en ce que** les terminaux protégés tout comme des points terminaux pour l'industrie 4.0 et « l'internet des objets », pour la connexion du matériel généralement sans surveillance, des générateurs de signaux et similaires, sont exploités avec les mêmes protocoles d'un portail côté hôte, comme décrit dans la revendication 2. Les terminaux et points terminaux cités sont « personnalisés » de façon similaire, ils utilisent respectivement l'identification d'appareil inaltérable en plus de l'identification du numéro de licence et de la version du micrologiciel et des programmes fixes respectivement utilisés, ainsi qu'un identifiant protégé de l'utilisateur respectivement actuel via un jeton physique, tel par exemple une carte à puce ou un stylo électronique, et utilisent des procédés de cryptage similaires avec des clés respectivement différentes. Des points terminaux protégés peuvent également assumer des fonctionnalités de passerelle et de concentrateur, par exemple pour la connexion d'appareils ou systèmes ne devant pas être directement accessibles à partir du réseau, pour la connexion de nombreux capteurs ou éléments de commande à un point terminal, ou également pour l'exploitation de plusieurs ou de multiples terminaux protégés via un petit nombre de connexions de communication communes. Pour la connexion à des points terminaux protégés, il est également possible d'utiliser des interfaces déjà existantes, par exemple des systèmes de bus industriels. Pour augmenter la sécurité d'exploitation, il est par exemple possible d'utiliser des procédés de redondance, par exemple par utilisation d'une connexion alternative au réseau, moyennant quoi, dans ce cas également, pour des terminaux et points terminaux protégés, les mêmes méthodes peuvent être utilisées.

7. Architecture de système et de réseau asymétrique selon la revendication 1, **caractérisée en ce que**, dans le mode de fonctionnement de commutation de ligne ou de canal, la commutation temporaire ou permanente de connexions est commandée de manière centrale par le réseau ou un portail, comme décrit dans la revendication 2, avec la participation des éléments de réseau pertinents à cet effet. En option, l'utilisation d'un procédé d'appel est également possible, un contrôle de flux peut avoir lieu de ce fait pour éviter une surcharge du réseau, par exemple de l'hôte. Grâce à la commutation dédiée de connexions, la qualité de celles-ci augmente, par exemple des durées d'exécution rapides et stables, une meilleure protection contre l'espionnage abusif ou le détournement, des dénommées attaques « man-in-the-middle ».

8. Architecture de système et de réseau asymétrique selon la revendication 1, **caractérisée par** la conception pour un fonctionnement hybride, par exemple dans le domaine international pour l'exploitation locale de participants dans le fonctionnement traditionnel de la commutation par paquets avec transfert du trafic de données via commutation de ligne ou de canal dans des pays avec des règles de protection des données plus strictes, et pour l'interopérabilité avec des systèmes cloud publics et privés à l'aide d'éléments de réseau correspondants.

9. Hôtes au sein de l'architecture de système et de réseau asymétrique selon la revendication 1 en combinaison avec la revendication 2, **caractérisés par** les fonctionnalités de commande assurées au niveau du portail côté hôte pour les terminaux protégés en combinaison avec leurs fonctionnalités d'appareil basées sur le matériel, moyennant quoi, mis à part le pur fonctionnement du navigateur pour l'utilisation de sites web, également les programmes fixes existant localement, par exemple pour l'affichage et le traitement de documents, et des programmes additionnels maintenus côté hôte, sont supportés fonctionnellement de façon équivalente à des dénommées « apps » ne pouvant pas être utilisées sur des terminaux protégés. Le portail établit par ailleurs la connexion à des applications centrales en aval, par exemple basées sur le cloud, et supporte des fonctions de protection telles l'authentification du terminal protégé et de l'utilisateur respectif ainsi que le cryptage du trafic de données ou également de contenus individuels ainsi qu'en combinaison avec le réseau, des fonctionnalités de routage et de commutation correspondantes devenant nécessaires, par exemple en raison de défaillances ou d'une surcharge.
